## Europäisches Patentamt
## European Patent Office
## Office européen des brevets

(11) Veröffentlichungsnummer: **0 226 707 B1**

# EUROPÄISCHE PATENTSCHRIFT

(45) Veröffentlichungstag der Patentschrift: **11.11.92**

(21) Anmeldenummer: **86111915.4**

(22) Anmeldetag: **28.08.86**

(51) Int. Cl.⁵: **F16J 15/10**, C09K 3/10

(54) **Imprägnierte Weichstoffflachdichtung.**

(30) Priorität: **18.12.85 DE 3544740**

(43) Veröffentlichungstag der Anmeldung:
**01.07.87 Patentblatt 87/27**

(45) Bekanntmachung des Hinweises auf die
Patenterteilung:
**11.11.92 Patentblatt 92/46**

(84) Benannte Vertragsstaaten:
**FR GB IT SE**

(56) Entgegenhaltungen:
**DE-A- 3 245 664       DE-A- 3 317 501
FR-A- 2 291 254       FR-A- 2 535 430
US-A- 3 970 322       US-A- 4 220 342**

(73) Patentinhaber: **GOETZE AG
Bürgermeister-Schmidt-Strasse 17
W-5093 Burscheid 1(DE)**

(72) Erfinder: **Giesen, Franz-Josef
Am Alten Turm 1a
W-5068 Odenthal 3(DE)**
Erfinder: **Zerfass, Hans-Rainer, Dr.
Finkenweg 8
W-5093 Burscheid(DE)**

**Beschreibung**

Die Erfindung betrifft eine imprägnierte Weichstoffflachdichtung, bevorzugt bestehend aus einem gegebenenfalls metallisch verstärkten Faservlies, wie insbesondere eine imprägnierte Zylinderkopfdichtung, Auspuffflanschdichtung oder eine Nebendichtung für Verbrennungskraftmaschinen, sowie das Imsprägniermittel auf der Basis eines vernetzungsfähigen Silicons zum Imprägnieren der Dichtung.

Weichstoffzylinderkopfdichtungen für Verbrennungskraftmaschinen werden üblicherweise vor allem zur Verbesserung ihrer Beständigkeitswerte und Abdichtgüte sowie zur Erhöhung ihrer Festigkeit imprägniert. Nach der US-A-3.970.322 bestehen solche Imprägniermittel aus flüssigem Polybutadien, Polyacrylaten sowie Systemen mit Isocyanaten oder Epoxiden, und die Imprägniermittel werden in der imprägnierten Dichtungsplatte unter gegebenenfalls Zusatz von Vernetzungsmitteln bevorzugt thermisch vernetzt.

Inzwischen sind auch flüssige Siliconsysteme bekannt, die bevorzugt unter Zusatz von Metallsalzkatalysatoren zu Siliconen mit vor allem guter Beständigkeit gegenüber Abdichtmedien, Temperatureinwirkung und Alterung vernetzen. Deshalb werden solche vernetzungsfähigen flüssigen Silicone auch schon zum Imprägnieren von Weichstoffzylinderkopfdichtungen verwendet.

Als Imprägniermittel dienen nach der DE-A- 32 45 664 flüssige polyadditionsfähige Silicone, wie bevorzugt ein Polymethylvinylsiloxan, das unter Zusatz einer Platinkomplexverbindung vernetzt. Diese Platinkomplexe werden allerdings vor allem durch Aminverbindungen oder Schwefelverbindungen vergiftet und verlieren ihre Wirksamkeit. Nach der DE-A- 32 45 664 enthalten daher die Dichtungsfaservliese amin- und schwefelfreie Kautschukbindemittel, damit das Imprägniermittel überhaupt ausreichend vernetzt wird. Solche Faservliesdichtungen sind aber als Spezialdichtungen relativ aufwendig herzustellen, und vor allem ist es aufwendig, ein asbestfreies oder asbesthaltiges Faservliesmaterial frei von Aminen oder Schwefelverbindungen und anderen Katalysatorgiften herzustellen.

Nach der DE-A- 33 17 501 werden Polysiloxansysteme mit reaktiven und vernetzungsfähigen Wasserstoffgruppen, wie vor allem Methylhydrogenpolysiloxanen, zum Imprägnieren von Weichstoffzylinderkopfdichtungen verwendet, und die Vernetzung in der imprägnierten Dichtung erfolgt unter Verwendung von vor allem organischen Zinn-, Aluminium- oder Bleisalzen. Solche vernetzten Siloxane besitzen jedoch auch nach dem Vernetzer. Polysiloxananteile mit ungebundenen und reaktiven Wasserstoffgruppen, die dann in der fertigen Dichtung noch weiter reagieren können. Vor allem im Oberflächenbereich der Dichtung können mit in Berührung stehenden Materialien solche Nachreaktionen auftreten, so daß die Dichtung klebt und unerwünschte Verklebungen mit dem Verpackungsmaterial oder bei einer Zylinderkopfdichtung besonders nachteilig mit den metallischen Dichtflächen des Motors oder des Zylinderkopfes nach der Montage auftreten. Nach der DE-A- 33 17 501 wird daher diese Dichtung nachträglich in einem zweiten Verfahrensschritt mit einem kondensationsvernetzenden Polysiloxanharz imprägniert beziehungsweise überzogen. Solche Maßnahmen sind naturgemäß als zweiter Verfahrensschritt unwirtschaftlich teuer, und ganzflächige Überzüge auf Dichtungen sind funktionsbedingt meist überhaupt nicht erforderlich.

Nach den FR-A-2291254 ist schon Gekannt um, zur Herstellung schützenden Antiklebbeschichtungen auf Papierfolien, ein Gemisch von flüssigen Polysiloxanharzen mit reaktiven Wasserstoffgruppen und additionsvernetzenden Polysiloxanharzen zu verwenden.

Der vorliegenden Erfindung liegt daher die Aufgabe zugrunde, eine imprägnierte Flachdichtung und das aus einem Silikonharz bestehende Imprägniermittel zum Imprägnieren der Flachdichtung zu schaffen, welche nach dem Vernetzen des Imprägniermittels keine nachteiligen Kleb- und Hafteigenschaften besitzt, welche einfach und kostensparend herzustellen ist, und welche gegebenenfalls sogar verbesserte weitere Funktionseigenschaften aufweist.

Erfindungsgemäß wird diese Aufgabe durch eine Weichstoffflachdichtung mit den kennzeichnenden Merkmale des Hauptanspruchs gelöst.

An mit diesem Gemisch imprägnierten Dichtungsmaterialien, in denen das Imprägniermittel anschließend vernetzt ist, wurden überraschenderweise adhäsive Eigenschaften festgestellt, die Dichtungen klebten nicht, und unerwünschte Verklebungen mit Verpackungsmaterial und nach der Montage mit den Dichtflächen wurden nicht beobachtet.

Überraschend war dabei vor allem, daß schon bei geringen Zusatzmengen an additionsvernetzendem Polysiloxan in bevorzugten Größenordnungen zwischen 3 und 20 Gewichtsprozent trotz entsprechend hoher Gehalte an Polysiloxanen mit reaktiven Wasserstoffgruppen das unerwünschte Kleben der vernetzten imprägniermittelhaltigen Dichtung nicht mehr auftrat. Schon geringe Mengen an additionsvernetzenden Polysiloxanen scheinen die reaktiven Wasserstoffgruppen zu blockieren und zu versiegeln und damit an einer unerwünschten Weiterreaktion zu hindern. Gefunden wurde dabei auch, daß die erfindungsgemäß imprägnierten Dichtungen gegenüber mit lediglich Polysiloxanen mit reaktiven Wasserstoffgruppen imprägnierten Dichtungen vor allem ein verbessertes Gleitverhalten, ein verbessertes Alterungsverhalten und eine verbesserte Medienbeständigkeit aufweisen.

Die bevorzugt verwendeten Polysiloxane mit reaktiven Wasserstoffgruppen bestehen aus einem Polyhydrogensiloxan mit einer bevorzugten Viskosität zwischen 15 und 30 m PaS. Als additionsvernetzendes Polysiloxan wird bevorzugt ein Vinyl-, Allyl- oder Acrylatsilikonpolymer mit bevorzugter Viskosität von etwa 500 m PaS verwendet.

Als Vernetzungskatalysatoren können 1 bis 5 Gewichtsprozent Gemische einmal aus Platinkomplexverbindungen und zum anderen Organometallverbindungen mit Blei, Aluminium, Zinn, Titan, Zink, Kobalt und/oder Zirkon, die entsprechend auf das additionsvernetzende Polysiloxan und das reaktive wasserstoffhaltige Polysiloxan wirken, verwendet werden. Überraschenderweise wurde gefunden, daß die organischen Metallverbindungen der zweiten Gruppe, wie vor allem organische Zinnverbindungen, alleine genügten, um beide Polysiloxanarten gleichzeitig zu vernetzen. Daraufhin konnte auf den Einsatz von Platinkomplexkatalysatoren, die an und für sich zum Vernetzen der additionsvernetzenden Polysiloxane erforderlich sind, verzichtet werden. Die Vernetzungskatalysatoren sind dadurch nicht mehr so leicht durch Fremdverbindungen zu vergiften und arbeiten störungsfrei.

Üblicherweise werden die Vernetzungskatalysatoren zusammen mit gegebenenfalls weiteren Vernetzungshilfsmitteln und den in der Dichtungsimprägniertechnik üblichen Zusatzstoffen direkt den Polysiloxanansätzen zugefügt. Es wurde aber auch gefunden, daß die organischen Metallverbindungen durch eine Vorimprägnation gegebenenfalls schon bei der Faservliesherstellung in das Faservlies eingebracht werden können. Der nach demn Trocknen fein verteilt auf den Fasern haftende Katalysator katalysiert die Vernetzung dem im zweiten Verfahrengschritt eingebrachten Polysiloxans genauso gut, als wenn er wie üblich, dem Imprägniermittelbad zugegeben worden wäre. Auf diese Weise kann vorteilhaft das Anspringen beziehungsweise das Vorvernetzen des Imprägniermittelansatzes und damit sein frühes Unbrauchbarwerden verhindert werden.

Typische Imprägniermittelansätze bestehen dann aus

75 bis 96 Gewichtsprozent eines Polysiloxans mit reaktiven Wasserstoffgruppen, wie bevorzugt einem Methylhydrogenpolysiloxan mit einer Viskosität zwischen 15 und 30 m PaS

3 bis 20 Gewichtsprozent eines additionsvernetzenden Polysiloxans aus bevorzugt Methylvinylpolysiloxan mit einer Viskosität von 500 m PaS

1 bis 5 Gewichtsprozent eines organischen Metallkatalysators mit Blei, Aluminium, Titan, Zink, Zinn, Kobalt und/oder Zirkon, wobei der Katalysator gegebenenfalls durch Vorimprägnation in das Faservlies eingebracht sein kann.

Durch die Erfindung können somit nicht klebende silikonharzimprägnierte Flachdichtungen hergestellt werden. Das Herstellungsverfahren vor allem ist einfach und kostensparend, da das Imprägnieren der Dichtung einstufig erfolgt, da ein Imprägniermittel mit dem Hauptbestandteil eines preiswerten Polysiloxans verwendet wird, und da ein Imprägniermittel mit einer niedrigen Viskosität und damit geringen Imprägnierzeiten und optimaler Durchtränkung des Weichstoffes bei geringen Materialverlusten nach den verschiedenen Imprägnierverfahren eingesetzt wird. Bei Vorimprägnierung des Dichtungsmaterials mit dem Vernetzungskatalysator können großvolumige Polysiloxanansätze vernetzungskatalysatorfrei ohne Gefahr des Unbrauchbarwerdens des Imprägniermittelbades verwendet werden, und es können Dichtungen vor allem in der Massenfertigung wirtschaftlich imprägniert werden.

Die eingesetzten Dichtungen besitzen zugleich die positiven Eigenschaften von siliconimprägnierten Dichtungen und sind vielfach den bekannten siliconimpägnierten Dichtungen überlegen.

Die Dichtungen besitzen vor allem ein verbessertes Gleitverhalten im Oberflächenbereich, ein verbessertes Alterungsverhalten, ein verbessertes Abdichtungsverhalten, eine verbesserte Beständigkeit vor allem gegenüber heißen Ölen und Kühlwasser und mit der hohen Temperaturfestigkeit verbunden ein geringes Warmsetzen unter Druckeinwirkung sowie eine hohe Belastbarkeit unter Druckeinwirkung.

Mit den erfindungsgemäßen Imprägniermitteln können vor allem Flachdichtungen aus Faservliesen für Verbrennungskraftmaschinen vorteilhaft imprägniert werden, im Sinne der Erfindung kann es aber auch zum Imprägnieren von anderen imprägnierfähigen Weichstoffmaterialien für Dichtungen oder im Textilbereich verwendet werden.

Die Erfindung wird durch ein Ausführungsbeispiel näher erläutert.

Ausgegangen wird von einem Imprägniermittelansatz aus

90 Gewichtsteilen
Methylhydrogenpolysiloxan (Viskosität 22 m PaS)
6 Gewichtsteilen
Methylvinylpolysiloxan (Viskosität 500 m PaS)
4 Gewichtsteilen
Dibutylzinndilaurat
Der Imprägniermittelansatz besitzt eine Viskosität von 24 m PaS, so daß ein für Zylinderkopfdichtungen geeignetes, metallisch verstärktes Asbestfaservlies von 3 mm Dicke durch Tauchen in das Imprägniermittelbad während 2 Minuten mit einer Porenfüllung von etwa 60 Volumenprozent imprägniert wird.

Nach der Imprägnation erfolgt das Vernetzen des Imprägniermittels im Ofen während 2 1/2 Minuten bei 230°C.

Am imprägnierten Material wurde das Klebverhalten, das Alterungsverhalten, das Abdichtverhalten und Fließverhalten bestimmt.

Das Dichtungsmaterial wurde in Stahlflansche und Aluminiumflansche unter 5, 10 und 20 N/mm² Dichtpressungsdruck eingespannt und einmal ohne Medieneinfluß 24 Stunden bei 150°C und unter Kühlwassereinfluß 100 Stunden bei 90°C belastet.

Die Dichtungen zeigten bei niedrigem Druck überhaupt kein und bei hohem Druck nur ein leichtes, nicht störendes Verkleben mit den Dichtflächen. Eine vergleichsweise getestete, mit Polymethylhydrogensiloxan imprägnierte Dichtung zeigte schon bei niedrigen Belastungen ein starkes Verkleben mit den Dichtflächen.

Im Alterungsverscuch von über 1000 Stunden bei 90°C war kein wesentlicher Abfall der Kompressibilität festzustellen.

Die Dichtungen sind bei einem Porenfüllungsgrad von nur 60 Volumenprozent unter bis zu 6 N/mm² Flächenpressung gegenüber Kühlwasser und Motorenöl dicht.

Die Fließgrenze des Materials entspricht dem Wert einer herkömmlich imprägnierten Dichtung.

## Patentansprüche

1. Imprägnierte Weichstoffflachdichtung, wie insbesondere eine metallisch verstärkte Faservliesdichtung, wie insbesondere eine imprägnierte Zylinderkopfdichtung, Auspuffflanschdichtung oder Nebendichtung für Verbrennungskraftmaschinen, dadurch gekennzeichnet, daß das Imprägniermittel aus einem Gemisch von flüssigen Polysiloxanharzen mit reaktiven Wasserstoffgruppen und additionsvernetzenden Polysiloxanharzen sowie einem Vernetzungskatalysator und gegebenenfalls weiteren Vernetzungshilfsmitteln besteht, wobei das Imprägniermittel in der fertigen Dichtung vernetzt ist, und daß das Imprägniermittel zum Imprägnieren der Dichtung 75 bis 96 Gewichtsprozent eines Polysiloxans mit reaktiven Wasserstoffgruppen und 3 bis 20 Gewichtsprozent eines additionsvernetzenden Polysiloxanharzes enthält.

2. Flachdichtung nach Anspruch 1, dadurch gekennzeichnet, daß das Polysiloxan mit reaktiven Wasserstoffgruppen aus einem Methylhydrogenpolysiloxan mit einer Viskosität zwischen 15 und 30 m PaS besteht.

3. Flachdichtung nach mindestens einem der Ansprüche 1 und 2, dadurch gekennzeichnet, daß das additionsvernetzende Polysiloxan aus einem Polysiloxan mit an das Silizium gebundenen Kohlenstoffdoppelbindungsgruppen besteht.

4. Flachdichtung nach Anspruch 3, dadurch gekennzeichnet, daß das additionsvernetzende Polysiloxan aus einem Methylvinylpolysiloxan mit einer Viskosität zwischen 300 und 600 m PaS besteht.

5. Flachdichtung nach mindestens einem der Ansprüche 1 bis 4, dadurch gekennzeichnet, daß der Vernetzungskatalysator aus einem Gemisch von Platinkomplexverbindungen und organischen Metallverbindungen mit Zink, Zinn, Kobalt, Blei, Aluminium, Titan und/oder Zirkon besteht.

6. Flachdichtung nach mindestens einem der Ansprüche 1 bis 4, dadurch gekennzeichnet, daß der Vernetzungskatalysator aus organischen Metallverbindungen besteht.

7. Flachdichtung nach mindestens einem der Ansprüche 1 bis 6, dadurch gekennzeichnet, daß die Flachdichtung mit vernetzungskatalysatorhaltigem Imprägniermittel imprägniert ist.

8. Flachdichtung nach mindestens einem der Ansprüche 1 bis 6, dadurch gekennzeichnet, daß der Vernetzungskatalysator dem Faservliesmaterial bei der Faservliesherstellung zugegeben oder im unimprägnierten Faservlies abgeschieden ist, und daß die Dichtungsplatte anschließend mit einem katalysatorfreien Polysiloxanimprägniermittel imprägniert ist.

9. Flachdichtung nach mindestens einem der Ansprüche 1 bis 8, dadurch gekennzeichnet, daß das Imprägniermittel aus
   75 bis 96 Gew.-%
   eines Polysiloxans mit reaktiven Wasserstoffgruppen
   3 bis 20 Gew.-%
   eines additionsvernetzenden Polysiloxans und
   1 bis 5 Gew.-%
   Vernetzungskatalysator
   besteht.

10. Flachdichtung nach Anspruch 9, dadurch gekennzeichnet, daß das Imprägniermittel weitere in der Dichtungsimprägniertechnik übliche Zusatzstoffe enthält.

11. Flachdichtung nach Anspruch 9, dadurch gekennzeichnet, daß das Imprägniermittel aus
    75 bis 96 Gew.-%
    Methylhydrogenpolysiloxan mit einer Viskosität von 15 bis 30 m PaS
    3 bis 20 Gew.-%
    Methylvinylpolysiloxan mit einer Viskosität von 500 m PaS und
    1 bis 5 Gew.-%
    Dibutylzinndilaurat
    besteht.

## Claims

1. An impregnated flat seal of soft material, especially such as a fibre fleece seal reinforced with metal, especially such as an impregnated cylinder head seal, exhaust flange seal or secondary seal for internal combustion engines, characterized in that the impregnating medium consists of a mixture of liquid polysiloxane resins with reactive hydrogen groups and addition cross-linking polysiloxane resins and also a cross-linking catalyst and, if desired, further cross-linking agents, wherein the impregnating medium is cross-linked in the finished seal, and further characterized in that the impregnating medium for impregnating the seal contains 75 to 96 percent by weight of polysiloxane with reactive hydrogen groups and 3 to 20 percent by weight of an addition cross-linking polysiloxane resin.

2. A flat seal according to claim 1, characterized in that the polysiloxane with reactive hydrogen groups consists of a methyl-hydrogen-polysiloxane with a viscosity between 15 and 30 m PaS.

3. A flat seal according to claim 1 or 2, characterized in that the addition cross-linking polysiloxane consists of a polysiloxane with carbon double bond groups bonded to the silicon.

4. A flat seal according to claim 3, characterized in that the addition cross-linking polysiloxane consists of a methylvinylpolysiloxane with a viscosity between 300 and 600 m PaS.

5. A flat seal according to at least one of claims 1 to 4, characterized in that the cross-linking catalyst consists of a mixture of platinum complex compounds and organo-metallic compounds with zinc, tin, cobalt, lead, aluminium, titanium and/or zirconium.

6. A flat seal according to at least one of claims 1 to 4, characterized in that the cross-linking catalyst consists of organo-metallic compounds.

7. A flat seal according to at least one of claims 1 to 6, characterized in that the flat seal is impregnated with impregnating means containing a cross-linking catalyst.

8. A flat seal according to at least one of claims 1 to 6, characterized in that the cross-linking catalyst is added to the fibre fleece material during the manufacture of the fibre fleece or is precipitated in the unimpregnated fibre felt, and in that the sealing plate is finally impregnated with a polysiloxane impregnating medium free from catalyst.

9. A flat seal according to at least one of claims 1 to 8, characterized in that the impregnating medium consists of:

   75 to 96 % by weight of a polysiloxane with reactive hydrogen groups
   3 to 20 % by weight of an addition cross-linking polysiloxane and
   1 to 5 % by weight of cross-linking catalyst.

10. A flat seal according to claim 9, characterized in that the impregnating medium further contains additives customary in the seal impregnating art.

11. A flat seal according to claim 9, characterized in that the impregnating medium consists of:

    75 to 96 % by weight of methyl-hydrogen-polysiloxane with a viscosity of 15 to 30 m PaS
    3 to 20 % by weight of methylvinylpolysiloxane with a viscosity of 500 m PaS and
    1 to 5 % by weight of dibutyl-tin-dilaurate.

## Revendications

1. Joint plat imprégné, en matière souple tel qu'en particulier un joint en tissu de fibres renforcé métalliquement, tel qu'en particulier un joint de culasse de cylindre imprégné, un joint de bride d'échappement ou un joint auxiliaire pour moteur à combustion interne, caractérisé en ce que l'agent d'imprégnation se compose d'un mélange de résine fluides de polysiloxanes avec des groupes d'hydrocarbures réactifs et des résines de polysiloxanes capables de réticulation par addition et d'un catalyseur de réticulation et le cas échéant d'autres agents auxiliaires de réticulation dans lequel l'agent d'imprégnation est réticulé dans le joint fini et l'agent d'imprégnation pour imprégner le joint contient 75 à 96 % en poids d'un polysiloxane avec des groupes d'hydrocarbures réactifs et 3 à 20 % en poids d'une résine de polysiloxane capable de réticulation par addition.

2. Joint plat selon la revendication 1, caractérisé en ce que le polysiloxane avec des groupes d'hydrocarbures réactifs est constitué d'un polysiloxane de méthylhydrogène avec une viscosité entre 15 et 30 m PaS.

3. Joint plat selon au moins une des revendications 1 et 2, caractérisé en ce que le polysiloxane capable de réticulation par addition est constitué d'un polysiloxane avec des groupes à double liaison carbone liés au silicium.

4. Joint plat selon la revendication 3, caractérisé en ce que le polysiloxane capable de réticulation par addition est constitué par un polysiloxane de méthylvinyle avec une viscosité entre 300 et 600 m PaS.

5. Joint plat selon au moins une des revendications 1 à 4, caractérisé en ce que le catalyseur de réticulation est constitué par un mélange de liaison par complexes de platine et de liaisons organo-métalliques avec du zinc, de l'étain, du cobalt, du plomb, de l'aluminium, du titane et/ou zircon.

6. Joint plat selon au moins une des revendications 1 à 4, caractérisé en ce que le catalyseur de réticulation est constitué de liaisons organo-métalliques.

7. Joint plat selon au moins une des revendications 1 à 6, caractérisé en ce que le joint plat est imprégné avec un agent d'imprégnation contenant un catalyseur de réticulation.

8. Joint plat selon au moins une des revendications 1 à 6, caractérisé en ce que le catalyseur de réticulation est ajouté au matériau de tissus de fibres lors de la fabrication du tissu de fibres ou est réparti dans le tissu de fibres non-imprégné, et en ce que la plaque d'étanchéité est par la suite imprégné avec un agent d'imprégnation de polysiloxane dépourvu de catalyseur.

9. Joint plat selon au moins une des revendications 1 à 8, caractérisé en ce que l'agent d'imprégnation est constitué de
75 à 96 %
en poids d'un polysiloxane avec des groupes d'hydrocarbures réactifs
3 à 20 %
en poids d'un polysiloxane capable de réticulation par addition
1 à 5 %
en poids d'un catalyseur de réticulation

10. Joint plat selon la revendication 9, caractérisé en ce que l'agent d'imprégnation contient d'autres adjuvants habituels dans la technique d'imprégnation du joint.

11. Joint plat selon la revendication 9, caractérisé en ce que l'agent d'imprégnation est constitué de
75 à 96 %
en poids de polysiloxane de méthylhydrogène avec une viscosité de 15 à 30 m PaS
3 à 20 %
en poids de polysiloxane de méthylvinyle avec une viscosité de 500 m PaS
1 à 5 %
en poids de dilaurate d'étain de dibutyle.